Europäisches Patentamt

**European Patent Office**

Office européen des brevets

(19)

(11) Publication number: **0 034 686**
A1

(12)

# EUROPEAN PATENT APPLICATION

(21) Application number: **80400243.4**

(22) Date of filing: **20.02.80**

(51) Int. Cl.³: **H 04 N 9/60**

(43) Date of publication of application:
**02.09.81 Bulletin 81/35**

(84) Designated Contracting States:
**CH DE FR GB IT LU NL SE**

(71) Applicant: **LADY BEA ENTERPRISES, INC.**
**1100 South Muskogee**
**Tahlequah Oklahoma 74464(US)**

(72) Inventor: **Thomas, Walter Carl**
**301 Choctaw**
**Tahlequah Oklahoma 74464(US)**

(72) Inventor: **Thomas, Wayne William**
**301 Choctaw**
**Tahlequah Oklahoma 74464(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Method and apparatus for generating and processing television signals for viewing in three dimensions and moving holograms.**

(57) Apparatus for generating and processing television TV signals of a visual scene for viewing in three dimensions, comprises a conventional TV camera, including three separate color video tubes, each camera tube adapted to receive light of a different one of the three primary colors. Each camera tube is aligned with one of three optical axes which are nominally parallel, and are spaced apart a selected distance in a horizontal plane. At least one of the first and third axes is rotatable so that it can be turned through a small angle in such a direction as to intersect the second and third axes at selected distances in front of the camera. Synchronizing beams are provided for two sub-rasters in scanning of the camera tubes. During a first scan, the first primary color signal from the first camera tube is muted, and on the second sub-raster, the third camera tube output carrying a primary color signal is muted. When the transmitter signal is received and displayed on a TV receiver and is viewed through a pair of eye glasses, in which one glass passes the first primary color and the other glass passes the third primary color, the visual scene will be seen in three dimensional viewing.

Croydon Printing Company Ltd

./...

FIG. 8

-1-

# METHOD AND APPARATUS FOR GENERATING
# AND PROCESSING TELEVISION SIGNALS FOR
# VIEWING IN THREE DIMENSIONS

## BACKGROUND OF THE INVENTION

### 1. Field of the Invention

This invention lies in the field of television signal generation and processing. More particularly it concerns a system for generating and processing TV signals from a visual scene, in which a three dimensional effect can be observed in the displayed TV signals, by properly orienting the optical axes of the three camera tubes, and by alternately muting the signals from a first and third tube which are adapted to pass the first and third primary colors.

### 2. Description of the Prior Art

In the moving picture industry, displays of moving pictures have been prepared and displayed for observation with a three-dimensional effect. This has been accomplished by using two separate cameras, with optical axes spaced apart and nominally parallel, but converging at a selected small angle. The light reaching each camera is filtered with one or the other of two primary colors. The corresponding pictures are displayed sequentially, while the observer watches the display with eye glasses, in which one glass passes the first primary color and the second glass passes the second primary color.

In the moving picture industry to obtain the three dimensional effect requires essentially doubling the photographic apparatus and doubling the number of frames of film which are prepared and projected. This doubling of cost has had an affect on the acceptance

- 2 -

of the process, which apparently makes the process uneconomical.

In the field of television the applicants are unaware of any prior art in which a three-dimensional display has been made.

## SUMMARY OF THE INVENTION

It is the primary object of this invention to provide a modification of the conventional television camera system so that a television picture can be generated and processed, such that the display of that picture on a television receiver can be viewed in three-dimensional projection.

It is a further object of this invention to provide a simple modification of the television receiver to provide a pseudo three-dimensional display.

It is a still further object of this invention to provide a modification of the TV camera and processing apparatus to make possible three-dimensional viewing of the received and displayed signal, while making it possible also to view the display in a conventional manner in two-dimensional presentation.

These and other objects are realized and the limitations of the prior art are overcome in this invention, by utilizing a conventional television camera, in which there are three video camera tubes C1, C2 and C3, receiving light along three different optical axes A1, A2 and A3, which are spaced apart and are nominally parallel to each other in a horizontal plane. Axis A1 is filtered with a filter F1 to pass a first primary color to C1. Similarly axis A2 is filtered with a filter F2 to pass to the camera C2 a second primary color, such as green, and the third optical axis A3 is provided with a filter F3 to pass to the camera C3 the third primary color, such as blue. The outputs of the three camera tubes C1, C2 and C3 are processed with video amplifiers V1, V2 and V3 in a conventional manner.

A conventional camera control is used which provides a synchronizing buss that sequences two sub-sweeps, or sub-rasters, which are interleaved. During a first raster, the output of the first video amplifier carrying the red signal is muted, or cut off, or disabled, and during the second sub-raster the corresponding output of the video amplifier V3, carrying the blue signal is cut off or muted. Otherwise the three output signals from the video amplifiers are processed in a normal manner to provide a conventional television signal to the transmitter, and eventually to a receiver.

In the receiver there will be on a first raster a picture displayed which will be deficient in red, and on the second raster there will be a picture displayed deficient in blue and so on. When these series of pictures are observed through eye glasses in which one lens is red and one lens is blue, the display will have a three-dimensional character, dependent on the directions of the optical axes of the red and blue video camera tubes.

The principal difference between this invention and the conventional camera is, that at least one of the three optical axes representing the three primary colors must be rotatable toward the other two. Preferably two optical axes, the first and third, should be rotatable towards the center one.

This type of operation can be provided with either one lens, or with two or three separate lenses. The simplest to conceive of is the one in which a separate lens is used in each of the three optical axes. Of course the lenses will be controlled together so that their focus and their zoom will be in step with each other, but their optical axes will not be precisely parallel, as they would be in the conventional camera.

In a second embodiment, two lenses can be used. One lens is in the first, or red optical axis. The other is in the third or blue optical axis. One or the other, or both lenses supply the green light to the central or second optical axis.

The system can also be used with one lens. In the case of the single camera lens, the three optical axes are formed out in front of the lens by use of appropriate mirrors and filters and possible simple lenses. Then the conventional mirrors and filters are used behind the lens and ahead of the camera tubes.

A further part of this invention lies in an apparatus modification on a television receiver, which is receiving conventional television signals taken with a single lens, and with the three optical axes precisely parallel. In this embodiment means are provided for alternately muting the red and the green signal from the video amplifiers in the receiver, to the control guns in the tube. If desired one or the other of the red and blue signals can be delayed with respect to the other one, to give the impression of a three-dimensional viewing situation.

## DESCRIPTION OF THE DRAWINGS

These and other objects and advantages of this invention, and a better understanding of the principles and details of the invention will be evident from the following description, taken in conjunction with the appended drawings in which:

FIGURE 1 is a schematic block diagram of the modified television camera, adapted to transmit processed signals which can be displayed and viewed in three-dimensions.

FIGURES 2, 3, and 4 illustrate different embodiments of lenses in order to utilize the three-dimensional display.

FIGURE 5 illustrates a detail of the rotation of the optical axes.

FIGURE 6 illustrates a further embodiment which involves a modification of the television receiver circuit.

FIGURE 7 illustrates a modified eye glass through which the three-dimensional picture can be viewed.

## DESCRIPTION OF THE PREFERRED EMBODIMENT

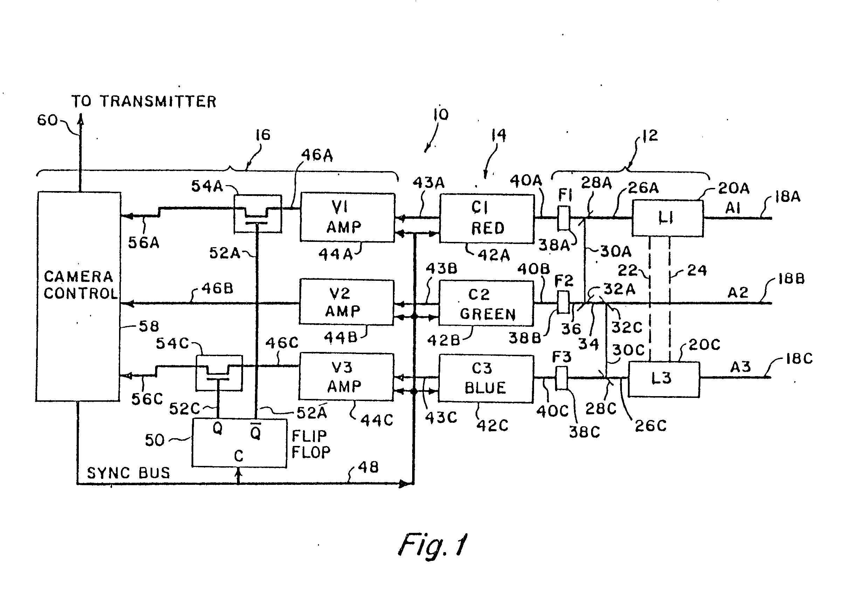

Referring now to the drawings, and in particular to FIGURE 1, there is shown one embodiment of this invention indicated generally by the numeral 10. This is a schematic block diagram, in which there are several parts. The lens and filter portion indicated generally by the numeral 12, the separate color video camera tubes, indicated generally by the numeral 14 and the video amplifiers and procession apparatus, indicated generally by the numeral 16.

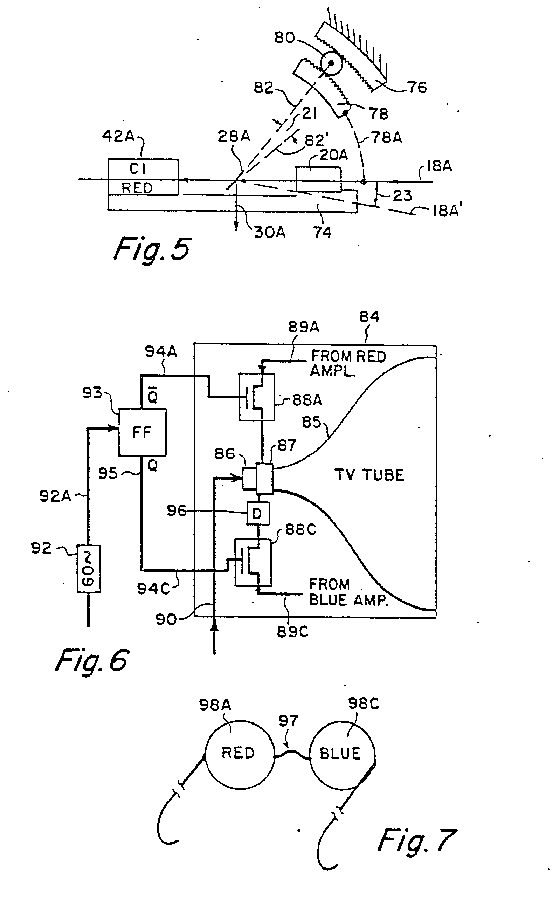

In the conventional television camera there are three video camera tubes, each one adapted to pass and process one of the three primary colors, such as, for example, red, green and blue. In FIGURE 1, the first camera tube C1, number 42A processes the red light, camera tube C2, number 42B processes the green light and the third camera tube C3, 42C processes the blue light. The lines 18A, 18B and 18C represent the three optical axes. They are nominally parallel, and spaced apart a selected distance. When precisely parallel to each other, they will not transmit a three-dimensional signal. It is only when one or both of the outer optical axes A1 and/or A3 is rotated, so that it intersects the center optical axis A2 at some selected distance in front of the camera, that the appearance of a three-dimensional picture will be evident. The details of rotating the optical axis will be discussed in connection with FIGURE 5.

In FIGURE 1 two camera lenses are shown L1, numeral 20A and L3, numeral 20C, respectively in the optical axes A1 and A3. The dash lines 22 and 24 represent control means, which tie together the two lenses L1 and L3, so that as one is rotated the other one will be rotated and the focus of each of them will track together and the zoom effect will also track.

filter F3 is designed to pass the third of the primary colors, namely blue, for example. The output of the video camera C3 goes by leads 43C to the video amplifier B3 for processing.

The mirror 28C in the optical axis 18C transmits part of the incoming light from lens L3 as beam 30C to a second partially reflecting mirror 32C which directs the light by beam 34 through the mirror 32A as beam 36 to the filter F2 and to the second video camera tube 42B. In other words, lens L1 passes red light to the first camera tube 42A, and part of the green light to the second camera tube 42B. The lens L3 in the third optical axis provides blue light to the third video tube C3 and some additional green light to the second video camera tube 42B.

A camera control 58 is provided as is customary in the video camera, and no detail of this control is required since the conventional control can be used. This camera control 58 provides a synchronizing buss 48 which provides signals to the video amplifiers and to the camera tubes to control the synchronization of the raster sweeps in all of the camera tubes and amplifiers. The camera control means 58 will provide two subscans interlaced, as in the conventional TV system. The synch-buss 48 is connected also to a flip-flop 50 which responsive to the synchronizing signal 48 is set to provide a Q output on 52C, during one sub-raster and a $\bar{Q}$ output on 52A during the second raster. The video tube V1 passes its output on lead 46A to an analog switch 54A and the output of the switch goes by lead 56A to the camera control. When there is positive signal on lead 52A, the analog switch will pass signals on lead 46A through 56A to the camera control 58 in exactly the same way that the signal goes from video amplifier V2 through lead 46B to the camera control. On the other hand, when there is no signal on lead 52A, the switch 54A will block the transmission of signal from 46A to the camera control.

Similarly when there is positive signal on lead 52C, the signal from the video amplifier 44C will go by lead 46C to the analog switch 54C, through lead 56C to the camera control, just as in the case of the video amplifier 44B. However, when a logical zero appears on the lead 52C, the switch 54C is opened or disabled, and there is no blue signal output from the video amplifier 44C to the camera control.

It is therefore clear that the flip-flop and the analog switches act as a synchronized switches, and other kinds of switches could be used, so that on the first raster the red signal and green signal are passed but no blue signal and on the second raster the green signal and blue signal are passed but no red signal.

The three video signals on leads 56A, 46B and 56C are then processed in the camera control to provide the transmitted signal 60 to the transmitter, and eventually to a television receiver. To the normal eye the picture on the television receiver will look like any conventional picture in three colors and will be two-dimensional. However, if as shown in FIGURE 7 a pair of eye glasses 97 are provided, in which one lens 98A is red-passing glass, and the lens 98C in the other part of the eye glass 97 is blue-passing glass, then the right and left eye will ultimately see the blue picture and the red picture which are not precisely aimed at the same scene and therefore will show a three-dimensional optical effect.

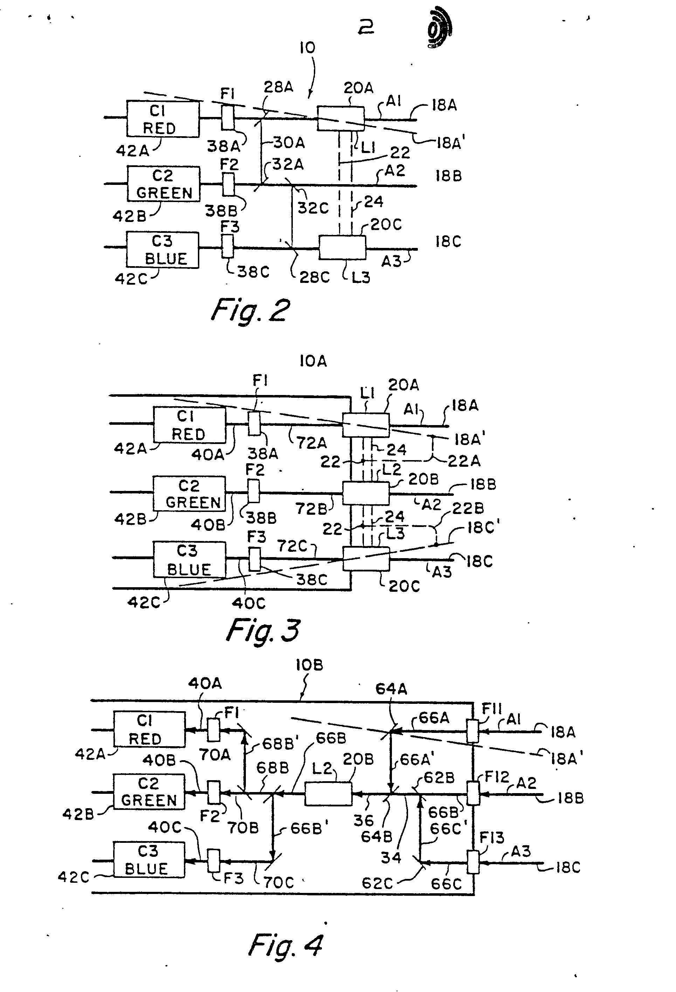

The lens and camera portions of the system of FIGURE 1 have been repeated in FIGURES 2, 3 and 4, which show respectively the use of two lenses 20A and 20C, in FIGURE 2 substantially identical to that of FIGURE 1. In FIGURE 2 the axis 18A is shown tilted inwardly in accordance with the dash line 18A. The description of FIGURE 2 is substantially identical to the portion of FIGURE 1 and will not be repeated.

In FIGURE 3 the lens and video camera tube and filter portions of the system of FIGURE 1 are reproduced, except that in FIGURE 3 there are now three lenses L1, L2 and L3, respectively numbered 20A, 20B and 20C, which define the three optical axes 18A, 18B and 18C. The three lenses L1, L2 and L3 are tied together by controls 22 and 24 as in the case of FIGURE 1, so that they will track each other on focus and zoom. No internal mirrors are needed and each lens supplies the light for one of the video cameras C1, C2 and C3. The filters F1, F2 and F3 are identical to those in FIGURE 1, and the action is substantially as described for FIGURE 1. In FIGURE 3 the rotation of the two outer axes 18A and 18C to the position of the dash lines 18A and 18C indicates that the two outer axes are rotated inwardly at an angle such as to intersect the center optical axis 18B at a selected distance in front of the camera. These could be controlled manually, as automatically or mechanically in response to the focus control 22. This automatic control is shown by the dashed lines 22A, 22B from the control 22 to the optical axes, 18A' and 18C'.

FIGURE 4 is another embodiment of the lens and camera tube section indicated generally by numeral 10B. Here a single lens L2 is utilized and all of the light going to the three video tubes 42A, 42B and 42C are supplied by the single lens L2, by means of semi-transparent mirrors, as is done in the conventional video camera. Thus the beam 66B is broken up into two parts 66B'which supplies the beam 70C through filter F3 to the third camera C3. Another part of the light in beam 66B goes as beam 68B to a second partially reflecting mirror which diverts part of the light as beam 68B'to another completely reflecting mirror and to the filter F1 and to the first video tube C1. Here again the filter F1 passes red light to the video camera tube. The remaining part of the beam 66B goes as beam 70B to filter F2 which passes green light to the second video camera tube 42B.

The main improvement in this embodiment is out in advance of the lens where there are three spaced apart filters and spaced apart substantially parallel optical axes 18A, 18B and 18C. The filter F11 passes red light similarly to FIGURE F1 to the lens. Filter F12 passes green light and is a substantially identical to filter F2. Filter F13 passes blue lights similar to that of filter F3. Thus filter F11 is in the optical axis A1 which passes light of the first primary color through a fully reflecting mirror 64A through a partially reflecting mirror 64B to the lens L2. Similarly the third optical axis 18C passing through the filter F13 passes a blue light as beam 66C to fully reflecting mirror 62C, to partially reflecting mirror 62B, and on through to the lens L2 and to the green second camera C2. The green light is defined by axis 18B and passes through filter F12 and two partially reflecting mirrors 62B and 64B through the lens L2 and through two additional partially reflecting mirrors, to the filter F2 and to the second video camera tube.

It will be clear that a simple lens co-axial with each of the axes 18A, 18B, and 18C preferably in advance of the filters F11, F12, F13 may serve to better define the three optical axes.

Again, if the axes 18A, 18B, and 18C are precisely parallel, there will be no three-dimensional optical effect; however, if the axis 18A is rotated inwardly as shown by the dash line 18A' there will be some contribution to three-dimensionality of the display.

One of the problems of rotation of the optical axis in conjunction with the use of mirrors is important, since the light that passes through filter F11 must be precisely focused and positioned with the other two light components, even though the axis 18A is rotated. To do this the axis 18A' is rotated at the center of the mirror 64A as shown.

Referring now to FIGURE 5 which is designed around the schematic diagram of FIGURE 2 and FIGURE 4, the nominal direction of the optical axis 18A is shown, and the rotated axis 18A' is shown. The center of rotation is at the center of the mirror 28A. In the drawing the element 76 is a stationary circular concave rack, and 78 is a circular convex rack, which is attached to, and moves with the axis 18A as shown by the dashed line 78A. Numeral 80 represents a small pinion positioned between the two racks 76 and 78. As the rack 78 moves through a selected angle say 10°, the pinion 80 will move only half that distance. Thus as the axis 18A rotates to 18A' the plane 82 of the mirror 28A will rotate to 82' through an angle 21 just one-half of that of the angle 23 of axis 18A'. Thus angle 21 is one-half of angle 23.

As the axis 18A is rotated, and drives the rack 78 the mirror 28A will follow in proper angle, so that the entering light through the lens 20A will be precisely in the same beam 30A, even though the axis does change. Thus the picture passed through the beam 30A to the second camera tube will not move even though the optical axis changes.

As shown in FIGURE 1 green light is supplied to the camera C2 from lenses L1 and L3. While the pictures will be stationary in view of the rotation of the axes 18A and 18C, the pictures that are represented will be slightly different and therefore there may be some minor blurring in the yellow picture in which case one of the other mirrors 28A or 28C can be removed so that the green light is supplied only by one lens L1 or L3.

In order to utilize the improved camera system of FIGURES 1, 2, 3 and 4, all that is needed to view the reproduced pictures in the receiver is the eye glass 97 shown and described in FIGURE 7. If the glasses of FIGURE 7 are not used, then the picture produced by the television signals from FIGURE 1 will look like any conventional television signal and will be only two-dimensional.

Referring now to FIGURE 6 there is shown an embodiment in which the television receiver is modified to provide a pseudo three-dimensional viewing. There will only be a two-dimensional picture, although there may be a psychological effect suggestive of three-dimensionality. The actual TV transmitted picture arrives on lead 90 to the TV tube 85 in the receiver 84. This is strictly a two-dimensional picture as is conventional. However, what has been done is to take a synchronizing signal either from the TV circuit on lead 90, or from the local power system. 60 cycle power 92, which drives, through lead 92A, a flip-flop 93. This flip-flop through the Q and $\bar{Q}$ outputs, control two analog switches, 88A and 88C. These switches sequentially control and mute the red signal, and then the blue signal; one in one sub-raster, and the other in the other sub-raster. Thus the video amplifier outputs, on lead 89A, the red signal, which goes through the switch 88A to the coupling unit 87, to control the red gun. Similarly, the blue signal from the blue video amplifier and lead 89C goes through the switch 88C to control the blue gun. But the Q and $\bar{Q}$ signals alternately mute the red and the blue by putting a high signal, or logical one, on the lead 94A to enable the red signal, or on 94C to enable the blue signal. If desired 89C (or in lead 89A) on analog phase shift or delay register 96 can be inserted in the lead so that the display of the blue signal (or the red signal) will be delayed or phase shifted from the display of the other signal, and will psychologically provide an impression of three-dimensionality.

What has been described is an improvement in video camera and processing apparatus for generating television signals from a visual scene, such that these signals when reproduced in a receiver and viewed with colored glasses will give the impression of three-dimensionality, to the picture displayed on a two-dimensional surface.

While the invention has been described with a certain degree of particularity, it is manifest that many changes may be made in the details of construction and the arrangement of components. It is understood that the invention is not to be limited to the specific embodiments set forth herein by way of exemplifying the invention, but the invention is to be limited only by the scope of the attached claim or claims, including the full range of equivalency to which each element or step thereof is entitled.

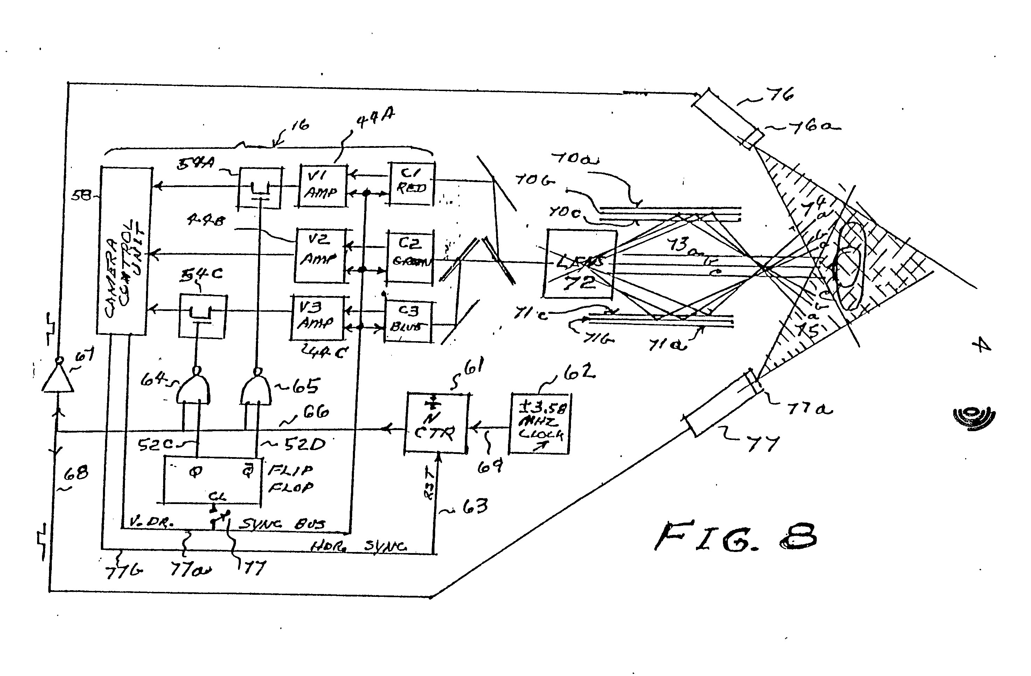

In figure 8 an addition has been made to the circuit as noted in Figure 1. Instead of producing a 3-D image which requires colored glasses to decode the imagry; this circuit does not require the viewer to wear color coded glasses of any sort and produces a 3-D color hologram by the addition of high speed pulsing or muting and a special mirror system.

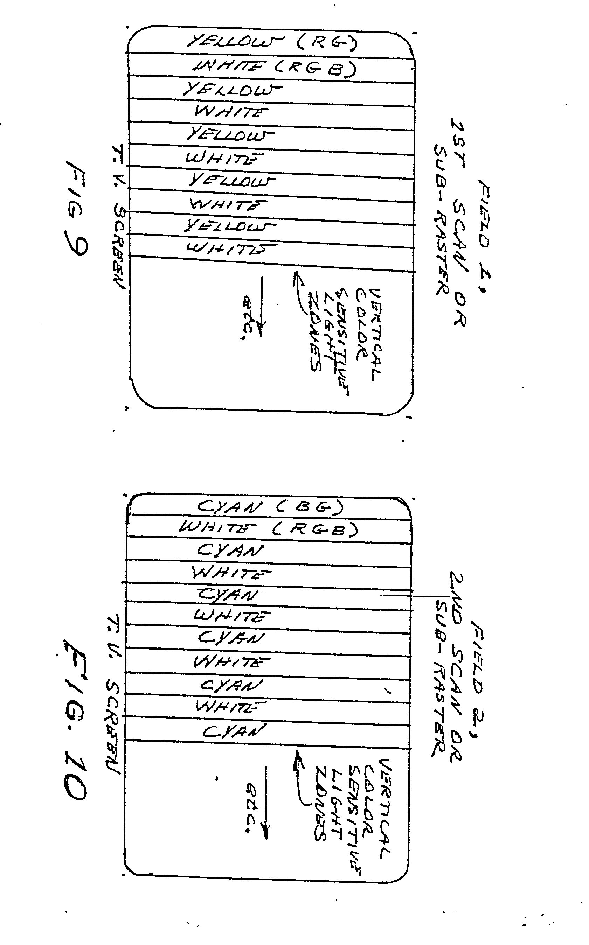

Between flip flop 50 and the two analog switches 54a and 54c, Nand gates 64 and 65 have been inserted. By means of line 66 a high speed pulse in the one megacycle range is connected to one leg of the inputs of the two nand gates 64 and 65.By means of variable +or - clock 62 whose output is fed in the input of divide by N counter 61 by means of line 69. By means of line 63 the divide by N counter 61 is syncronized with the camera sync system. The horizonal color burst gate pulses from the camera control unit syncs the high speed pulses of this circuit the beginning of each line scan of the the TV camera. The high speed pulse 66 causes analog switch 54c to turn off and on rapidly during field 1 or subraster one while Q of flip flop 50 is high or of a positive voltage output. At this moment $\bar{Q}$ is low; causing nand gate 65 to turn on analog switch 54a for the complete scan or subraster (one sixtieth of a second) ignoring the high speed puses of 66. Since the green video voltages from video amp 44b are fed straight into the camera control unit 58 and the red video voltages are locked on for the complete scan or subraster, that leaves the blue video scanning voltages from video amp 44c muting at high speed against yellow (green and red combine to produce the secondary color yellow). This action produces white and yellow vertical light sensitive bar zones as in Fig 9.

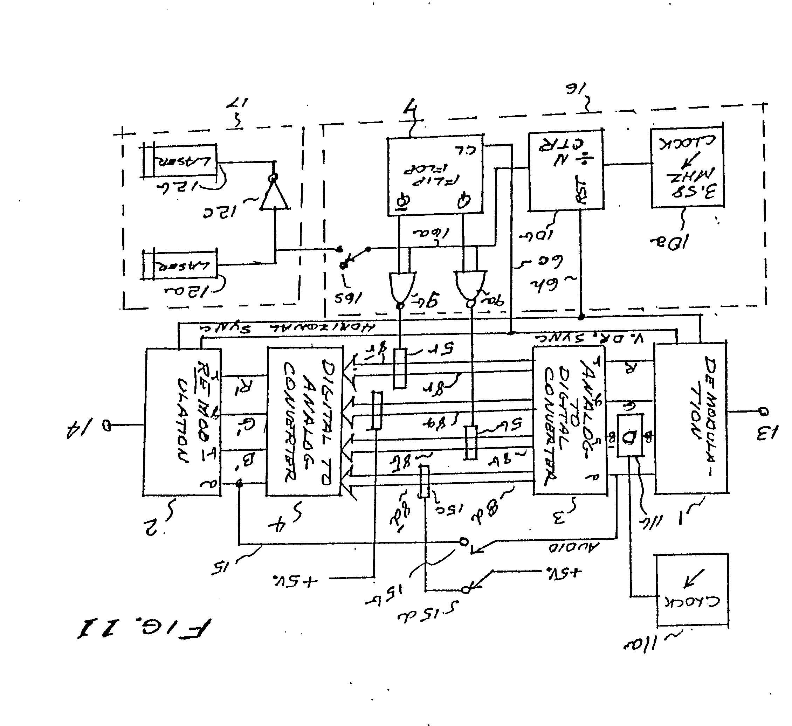

When the next clock pulse from the vertical drive synce of the camera control unit 58 is recieved at the clock input of flip flop 50, $\bar{Q}$ will assume high state thus enableing via pulses of line 66 nand gates 65 to alternately turn off and on at high speed. Since nand gate 64 locks 54c or blue on for the whole scan and green is still on permantly, this causes red to pulse or mute on and off at high speed ( + or - 3.58 MHZ divided by N ) to produce imagry sensitive to white and cyan vertical light sensitive bar zones as in Fig 10.

With switch 77 open (stopping flip flop 50 ), during camera set or adjustment, the vertical light sensitive bars may be alighned by varying clock 62 until the bars are straight or uniform. By selecting an "N" factor of 2 to 10 on the divide by Ncounter 61 the width of the bars may be altered. Nominally though divisors 2 through 6 seem to give the best results. Larger divisor numbers give wider bars and conversly smaller divisor numbers produce thinner bar zones. During normal camera operation swicth 77 is closed and field to field switching resumes.

As flip flop 50 continues to change state as clocked by vertical sync bus 77a a field to field 3-D color hologram image appears at the television screen, on the alternately shifting vertical light sensitive bar zones. The viewer is not required to wear color code glasses for viewing.

In this embodiment yellow dichroic mirrors are used. Between layers of glass 70a and 70b a partially reflective gold silverd tinting is applied at 70b making a three layer sandwitch comprising of glass, gold silvered layer, and glass. 71abc is comprised the same way. With these two layered semi-reflective mirror a dichroic color shift takes place that changes the color reflectivity as the angle of the particular light beam hits and is reflected off. The density or thickness of 70a and 70c may be of different densities to control the amount of color shift taking place.

As direct light enters lens 72 by means of straight beams such as 73ab & c, additional light is collected by special mirror surfaces 70c and 71c. Via light beam paths such as 74ab & c striking mirror surface 71c at different angles from the subject 76 and beams such as 75ab & c striking special mirror surface 70c at various light angles reflecting to the main camera lens 72 a color registration shift takes place. Thus holografic light interference patterns are reflected through the main lens 72 on to the surface of the video camera pick-up tubes.

Thus by switching or muting one or more of the color signals during processing of the video outputs of a color television camera; color senstive light zone vertical bars polarize the human eyes so that when a special dichroic mirror system is utilized in front of conventional lens, a moving three dimensional visual scene is processed for viewing on television without the aid of special glasses.

To strengthen or harden the hologram image (but only optionally required) a laser, one or more 76 and 77 is positioned on each side of the camera and focused through spreader lens 76a and 77a toward the object subject to be imaged. The lasers are syncronously fired by the high speed pulses via line 66 with one side of the lasers being inverted out of phase with the other side by inverter 67. ( A bank of lasers could be used on each side; the one bank being $180^{\circ}$ out of phase with the other.) The reflected light path is imaged directly to the conventional camera lens 72 while simultaneously angled holographic inter- ferance light patterns are also imaged to the lens 72 by the special mirrow system 70abc and 71 abc.

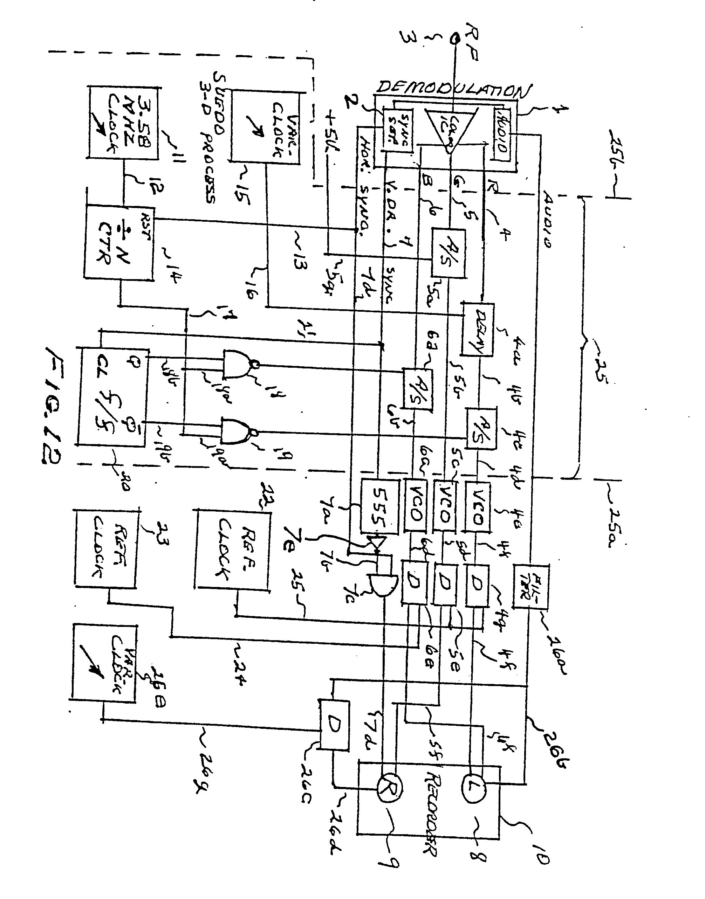

In Figure 11    a  digital color TV 3-D hologram processor control unit is described.

From the input 13 comes the RF envelop containing the audio, red, blue, video *GREEN* and vertical & horizonal aync signals to the demodulation sections of a(known) standard VTR, tuner or station switcher. Through the known circritry of standard television recievers which this  disclosure shall not take time to outline. The audio is first seperated from the R.F. signal or envelope. Then the sync seperation circuits demodulate the horizonal and vertical pulses and finnally the individual red green and blue scanning voltages are read and exited. This action is represented by demodulation at 1. At this point where the RG & B video signals exit the demodulation circuits and also the demodulated sync signals this circuit could be connected to the simular points int the camera control unit of any TV color camera.

At 11b is shown an optional analog time delay variable from 0 to an appropriate time to shift or offset one or more of the primary colors for the "set-up" of suedo 3-D holograming. 11b is of the type controlled by 11a a variable clock, which sets the length of time delay or off-setting of the image.  _

Primary color $\bar{B}$, G, & R ($\bar{B}$ being the phase delayed primary color selected) enters analog to digital converters 3$b$, 3$g$, & 3$r$ via lines $\bar{B}$, G, & R. The audio digital conversion can be optional whether or not "signal cleaning" is desired. The digital processing can be by-passed for audio by closing switch 15b which simultaneously opens 15d dis-ableing digital transmission lines 8d with tri-state switch 15c.

The red green and blue scanning voltages are individually and simultaneouslyconverted to a digital word or byte at 3b, 3g, & 3r. (This digital word or byte may be any size from 3 to 8 bits. 3 being perhaps too course and 8 a little too diffinitive. a four or five bit word should be sufficiantly detailed since the shadding charts for TV rarely exceed 16 shades.)

The binary word values of the red, green and blue video signalsand audio signals leaves the analog digital converters at 3 ᵣ ᵍ ᵇ via digital transmission busses 8abg & r. The blue and red digital voltages representation word bytes arealternately in a pulsating or muting manner interrupted by data bus control switches 5b and 5r. (the c mos 4066 chip for example) These data bus control gates are controlled by the 3-D hologram muting circuit 16 whose switching action has been previously described in Fig 8.

Via line 6c the vertical drive syncoutput of 6v is brought to theclock input of flip flop 7 whichcontrols field to field changes of color processing for the 3-D effect. Via line 6h the hor. gate sync resets the divide by N counter 10b whichserves the dual purpose of dividing down variable clock 10a and syncs the high speed pulse 16a to thecamera or television viewing monitor.

The high speed pulses of 16a (+ or - 3.58MHZ with N being normally between 2 to 6 )serve two purposes; 1st to pulse the high speed inputs of nand gates 9a and 9b and optionally to drive the phased outputs of laser gates 12b and 12a. 12c being a pulse inverter to cause the lasers of (76& 77 of Fig ℰ ) THE OPTIONAL LASER LIGHTING SYSTEM to fire alternately 180° out of phase with each other and in sync with their respective vertical light sensitive zones

0034686

created by the muting circuit 16, alternately pulsing at high speed as the data bus control switches 5b and 5r switch the muting from field to field.

By varying clock 10a the muting and laser system is tuned stablelizing the vertical light sensitive bar zones and thereby "hardening" the 3-D hologram .

Switch 16s enables .the optional firing and use of the laser lighting system which in the case of the "suedo 3-D hologram effect"they would not be used. During use of optional laser lighting.system of the 3-D color hologram camera, usage of this circuit the optional time delay 11b would be turned down to or near zero by clock 11a.

On the digital data buses $8\overline{d}$ and $8\overline{b}$ & $8\overline{r}$ the 3-D holografic processed word byte values are fed to the master digital to analog converter 4abgr. which re-converts the digital signals of red blue,green and audio back to original analog states where they are fed intothe Re-modulation 2 circritry. ( These comprise standard and known modulation processsess found in the camera control units of most color TV cameras.)

The horizontal sync 6h and vertical sync 6v are also fed back into re-modulation 2 section at 14. The re-processed R.F. envelope re-appears for routing either to standard VTR, transmitter or color TV monitor reciever to either to _ tape broadcast or view the 3-D hologram imagry.

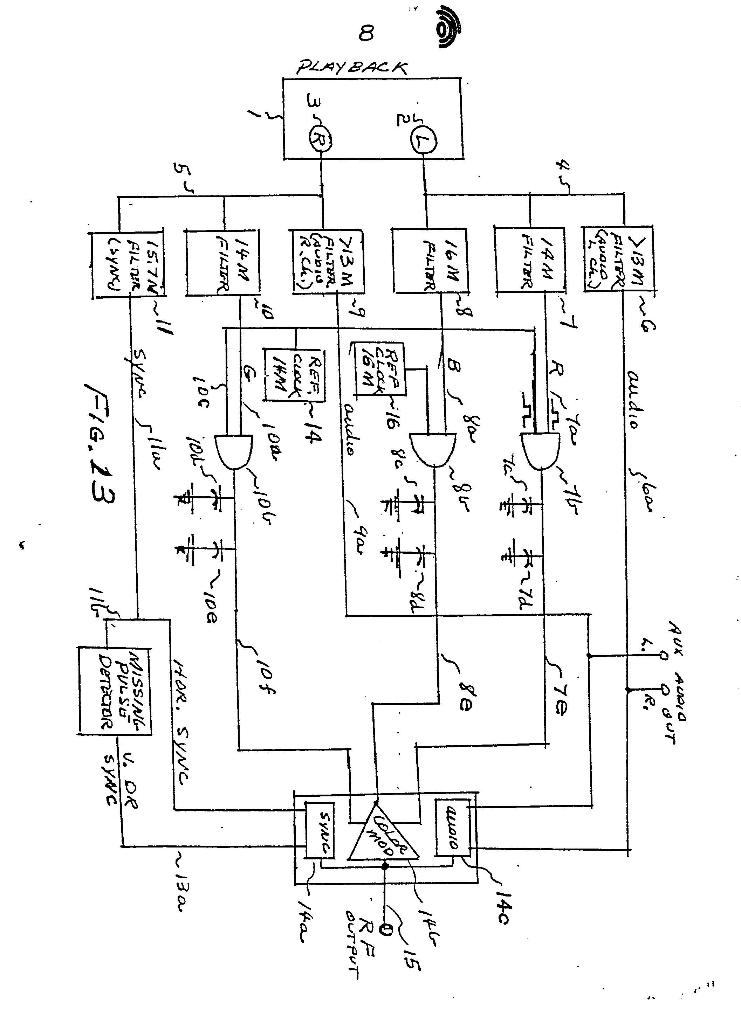

In Fig. 12 a complete system for decoding 3-D suedo hologram processing and converting TV signals to low band and recording on audio frequencies(tape recorders or even vinyl record ); is shown. The record bandwidth is narrow enough (ie 0 -16000 cps) for AM or FM broadcast or telephones transmission lines. (for telephones lines for black and white to utilize only one xideo line at a lower control frequency could be used.)

At line 3 the composite TV video signal with color and Sync and audio enters the known and standard De-modulation process found in standard TV recievers or cameras.. At 1 an IC demodulation chip delivers Red green and blue primary color voltages toline 4,5,and 6. Through the known teckniques of Sync seperation de-modulation circiuts horizontaland vertical drive sync pulses are delivered to 7 and 7d.

At 4a the analog 512 stage bucket brigade type time delay chip whose variable time delay is controlled by variable clock 15 through lead 15 ; off-sets the imagry of the Red color guns of the TV system ;to set up synthesization of the 3-D hologram effect. Section 25 as shown by dotted lines 25a and 25b is the identical heart of the suedo 3-D hologram effect described in Fig 8. However a briefreview of this section will be given.

Analog switch 5a (transmission gate) is gated on permantly by connecting it's enabling input to +5V., allowing the green scanning voltages to transmit ia line 5b un-interrupted leaving green on permantly for all the scans (for a different lightin effect 5g could be connected to Q or $\bar{Q}$ of flip flop 20 for alternate field combinations of green to the other primary colors. However for this descr iption we shall leave green on continuaously).

Analog switch 6a and 4c are continu ously and alternately switched at low and high speeds by nand gates 18 and 19 (low speed = 60 cps or field fre quency; high speed= + or - 3.58MHZ/N) The nand gates 18 and 19 are controlled by the +or- variable 3.58MHZ CLOCK 11, whose output Via line 12 is routed tothe divide by N counter 14 .

(N being an integer factor of 2 to 10 - when N is greater the resulta:
bar zones are wider  2-6  being the desired factor inversly of large
to small TV screens.)

The output of counter 14 is routed via line 17 to the
respective input gates 18a and 19a of nand gates 18 & 19.
This pulses at high speed the selective and alternate
fields or subrasters of the TV screen scan.The Q and $\bar{Q}$
output of flip flop 20 as synced and driv.en by the vertical drive output. of sync seperaer via line 21 causes alternately the red video voltages at 4d and blue video voltages at 6bto alternately be turned off and on at high
speed. This action produces the vertical light sensitive bar
zones of primary and secondary colors which synthesize the 3-D
hologram effect.

Beyond to the right of dotted line 25a on Fig/2 is the
narrow band recording circuit  which will allow the TV .
3-D  holographic effect to be recorded on an ordinary
cassette, reel to reel recorder or even commercial vinyl
record disk.

The red green and blue video scan voltages via lines
4d, 5b and 6b are delivered to voltage controlled
oscilators 4e, 5c, and 6a  These oscilators provide variable
fre. quencies which control the phase shift positions of
time delay 4g, 5e, and 6e. (the same type 512 stage serial
analog delay or SAD lines used in 4a. ie the SAD-1024A chip)

These time delay devices delay the crystal controlled
reference pulses inputed to them by clocks 22 and 23. (these
clocks are very stable cyrstal controlled clocks which
produce square waves and are used also later in the decoding
proceedures)

0034686

The vertical drive sync pulses 7 and the horizonal gatepulse7d from the sync seperator 2 are combined in one pulse stream by the variable one shot multivibrator 7a and *INVERTER* 7e, "and" gate 7c. This provides a control stream of pulses of 15734 cps which is interupted every 60th of a second for 5 to 10 pulses as adjusted by 7a. (In playback mode a missing pulse detector seperates this pulse stream back to the vertical drive and master horizontal line frequencies.)

The audio portion of the RF signal envelope is de-modulated with known teckniques and routed via line 26 to limiter filter 26a which is designed by known methods to cut off the upper frequencies at 13,000 cps to prevent false coding to reach the red, blue, and green spectrum frequencies. By means of line 26b the limited audio signal is routed to the left recordingchannel of the recorder or record.

By means of another variable analog time delay line (SAD-1024A type) 26c whose time delay is controlled by another variable oscilator clock 26e, a suedo stereo echo effect is achieved. This time delayed audio signal is recorded on the right channel of the recording device, record or stereo AM or FM transmitter.

The red and blue video time phased control pulses of 14000 and 16,000 cps are recorded on the left channel 8 of the recorder 10.

The green video time phased control pulses of 14,000 cps 5f and control pulses 7d are recorded on the right 9 recording channel. Thus on one stereo recording, (left and right channels) both audio channels,red, green and blue and sync pulses are recorded.

Fig 13 is the playback mode of Fig 12; a narrow band TV 3-D suedo hologram stereo recorder.

On the left band of the stereo recorder (it may be any audio stereo recorder capable of reaching 16,000cps - monochrome TV can be        .  from the signals generated on the right channel only)

From the right channel output 3 the composite signal with suedo sync and video via lead 5 the signal is fed simultaneously into audio filter 9, video filter 10 and sync filter 11.. Audio filter 9 only passes frequencies up to 13,000 cps or less in frequency response. The green video carrier phase controlled pulse filter 10 is sharply tuned to the carrier pulse frequencies of 14,000 cps. Via 10a  it is fed into And gate 10b where it is phased against the clock 14 to produce the varying video green voltages.(clock 14 is a rock steady crystal controlled reference fre.quency of 14,000 cps. It can be the same clock as Fig$^{12}$-22.)

At 10d and 10e these voltages are smoothed to give a more sinosodle  waveform by connecting the capcitors 10d and 10e to ground potential.

This re-constituted video green signal is then fed to the re-modulation circuit 14$^{b}$where it is re-modulated into a conventioal RF output 15.

Filter 11 is tuned to 15,734 cps to pass only the sync control pulse stream. Via lead 11b missing pulse detector 13 detects the 60 cps Vertical drive sync signal ( (this can be a 555 chip which can be made to vary the width of the sync pulse.)

2

The red and blue control phase shifted pulses are processed in the same manner as the green video pulse with filter 7 tuned to 14,000 cps for red and filter 8 tuned to 16,000 cps for Blue.

After being phase beat against And gates 7b and 8b respectively and smoothed by capacitors 7c, 7d and 8c, 8d. the resultant color volgages of red and blue are fed into the re-modulation section 14. ( the reference clock 16 is also crystol based for accuracy and fed to And gate 8b for the blue phase referencing.)

The re-modulation section 14 uses known circritry methods of standard color video camera and camer control units to re-combine the audio, color and sync signals into a useable compatible RF color TV signal, for television monitoring , transmitting or conventional VTR recording , but mainly TV viewing.

0034686

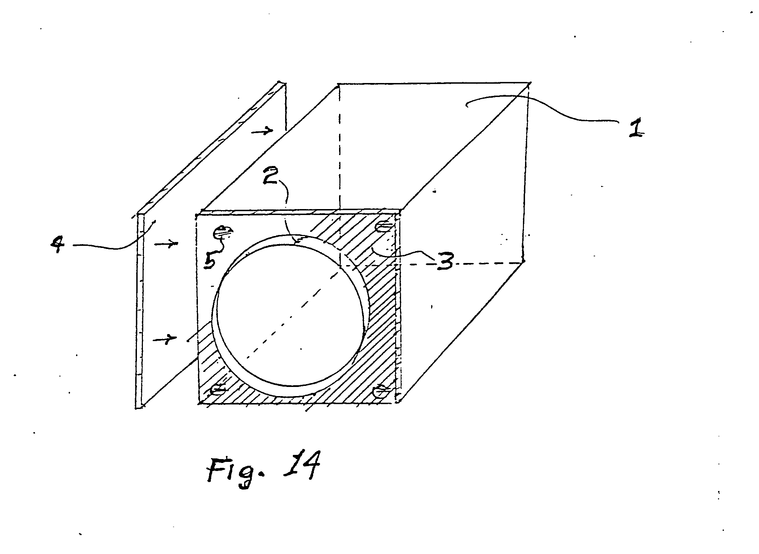

Figure 14 is a three dimensional holografic cube mirror lens comprising a solid cube 1, made of solid glass or plastic with a ring plate 3 attached to the cubes back side with screws 5, or glue, composite with threaded ring 2 for mounting forward in front of any conventional camera lens .

Optionally, for placement on one or more sides of the cube is a half silvered (and optionally tinted for color coding) mirror 4 comprised of one or more layers facing inward toward the cube alternately of high and low density layered glass sheets.

This three dimensional hologram cube mirror lens can take the place optionally of 70abc and 71abc of Fig. 8. Ring plate 2 attaching to lens 72 of Fig. 8.

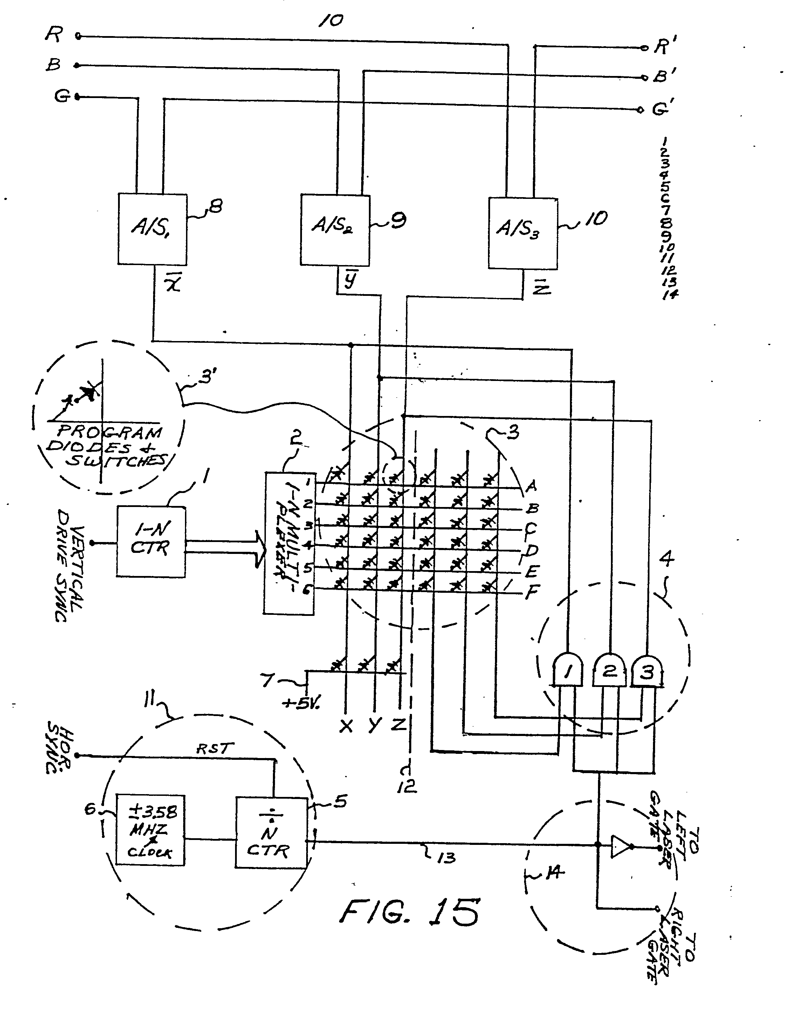

Figure 15 is an improved programable color muting syncronizer which can be programed to match any color dichroic mirror or laser system. It is caused to switch from field to field by the vertical drive sync pulse from the camera control unit advancing the 1-N counter 1. If the 1-N counter 1 is set for N to = 2 (whole interger two); field to field switching occurs. If the counter 1 is set (or straped) at N=6; than the switching goes sequentially through three frames (enough to cover all three primary colors and their secondary counterparts) or six complete fields or sub-rasters with simple field to field switching or field to field muting & high speed switching. The high speed pulses 11 fed into the programable switching matrix (actually a modified form of EPROM. line 12 seperate each arm of the switching matrix 3 in half; the xyz side for low speed switching and the x'y'z' side for high speed switching.) by nand gates 1, 2, and 3, via line 13, which also supplies the phased pulses 14 for laser firing syncronization.

As multiplexer 2 is driven by the counter 1 the outputs of the multiplexer 2 sequence to the number set by N of the counter 1 and continues to re-sequence to N over and over again as the camera operates. As the sequence is advanced by counter 1, arms ABCDE and F (if N= 6) are sequentially powered to +5V. ( 2 is powered to +5V)

The switching matrix of ABCDEF and xyz x'y'z' preform the function of a programmable read only memory bank which sequentially fires analog switches 8,9, & 10 systematically muting the red, blue and green video signals to produce the three dimensional hologram.

0034686

To effect the same sequence of muting as embodied in Figure 8, the following switches should be set to "on";

Set counter 1 to N = 2.

At arm 7 turn on x

At arm A turn on z and y'.

At arm B turn on y and z'.

This sets green on permantly bytying +5V. to analog switch 8. When multilexer 2 advances to it's first position activating arm A to +5V. z will turn analog switch 10 for thewhole field or 1st sub-raster causeing red to turn onsolid for the whole scan, combining with green to produce complementary yellow backfield. Going across arm A, y' will turn nand gate 2 on to allow the high speed pulsing of 11 to turn off and on at high speed analog switch 9 to produce white and yellow light sensitive bar zones. ( When analog switch 9 pulses blue against the yellow background the blue combines with yellow to produce the full color white zones.)

When multiplexer 2 advances to it's second encrement to activate arm B to +5V., then switch y allows a pulse to turn on blue for the whole field two or subraster two. This produces a cyan secondary color for red to pulse against at high speed through switch 2 to z'. This will produce white and cyan vertical light sensitive bar zones for field two or subraster two.

Many other primary and secondary color combinations may be programmed with this switching circuit to produce various combinationsof primary and secondary low and high speed switching to match many primary or secondary colored dichroic mirror and laser or light systems. The dotted line configuration 14 shows the out-going connections for the syncronous phased firing of the optional laser light system.

- ⋀ -

WHAT IS CLAIMED IS:

1.   Apparatus for generating and processing television signals of a visual scene for viewing in three-dimensions, comprising;

(a)   first, second, and third video camera tubes, each with their corresponding optical axes in a horizontal plane and nominally parallel to each other; each camera tube sensitive to light of a selected primary color, respectively;

(b)   means to transmit said visual scene light, of a first primary color to said first camera tube, light of a second primary color to said second camera tube, and light of a third primary color to said third camera tube;

(c)   means to drive the scanning systems in said three camera tubes responsive to a synchronizing signal in an interlaced first and second raster;

(d)   means to mute the output signal of said first camera tube on said first raster; and

(e)   means to mute the output signal of said third camera tube on said second raster.

2.   The apparatus as in claim 1 including;

(f)   means for rotating at least one of said first and third optical axes, inwardly, within said selected plane, so as to intersect said second optical axis at a selected distance in front of said camera tubes.

3.   The apparatus as in claim 2 including;

(g)   means to process and transmit the combined output signals from said three camera tubes to a video receiver, and to display said rasters; and

(h) means for a viewer to view said displayed rasters with eye glasses in which each eye is provided with one of said first and third primary colors.

4. The apparatus as in claim 1 in which said means to mute the output signal of said first and third cameras comprises;

(a) analog switch means connected in the output leads of said first and third camera tubes, in which said first camera tube output goes to a first analog switch means and said third camera output goes to a second analog switch means;

(b) synchronous switching control means controlled by said synchronizing signal;

(c) one output of said switching control means connected to enable said first analog switch means; and

(d) a second output of said switching control means connected to enable said second analog switch means, said first and second outputs out of phase with each other.

5. The apparatus as in claim 1 in which said means to transmit light from said visual scene comprises;

(a) a first lens along said first axis for passing light through a first color filter to said first camera tube;

(b) a second lens along said second axis for passing light through a second color filter to said second camera tube;

(c) a third lens along said third axis for passing light through a third color filter to said third camera tube.

6.    The apparatus as in claim 1 in which said means to transmit light from said visual scene comprises;

        (a)   a first lens along said first axis for passing light through a first color filter to said first camera tube, and for passing light through a second filter to said second camera tube;

        (b) a second lens along said third axis for passing light through at least a third color filter to said third camera tube.

7.    The apparatus as in claim 6 including means for passing light from said second lens also through a second filter to said second camera tube.

8.    The apparatus as in claim 1 in which said means to transmit light from said visual scene comprises;

        (a)   a lens;

        (b)   means between said lens and said camera tubes to transmit light through a first color filter to said first camera tube, and to transmit light through a second filter to said second camera tube, and to transmit light through a third filter to said third camera tube;

        (c)   means in front of said lens, to provide light to said lens from said scene along a first axis spaced from, and substantially parallel to a second axis, which is the axis of said lens, and a third axis, spaced from and substantially parallel to said second axis, on the opposite side of said second axis from said first axis; all three axes in a horizontal plane; and

(d) a first color filter in said first axis; a second color filter in said second axis; and a third color filter in said third axis.

9. The apparatus as in claim 8 including means to rotate at least one of said first and third axes so as to intersect said second axis at a selected distance in front of said lens responsive a focus control means of said lens.

10. In a television camera and display system comprising;

(a) an optical system defining three nominally parallel, spaced, optical axes, in a horizontal plane, the first and third axes on opposite sides of said second axis.

(b) means to transmit light arriving from a viewing scene along said first axis to a first video camera tube, through a first light filter that passes a first primary color;

(c) means to transmit light arriving along said second axis to a second video camera tube, through a second light filter that passes a second primary color;

(d) means to transmit light arriving along said third axis to a third video camera tube through a third light filter that passes a third primary color;

(e) synchronizing means to provide first and second rasters interlaced;

the method of operating said television and display system, comprising the steps of:

(1) muting the video output signal of said first camera tube, on said first raster;

(2) muting the video output signal of said second camera tube on said second raster; and

(3) viewing the video picture on a receiver tube through eye glasses in which one glass passes said first primary color, and the second glass passes said third primary color.

11. The method as in claim 10 including the additional step of rotation, in the common plane, at least one of said first and third axes toward the other so as to intersect at a selected distance in front of said cameras.

12. Apparatus for providing a television display having a pseudo three-dimensional character comprising;

(a) a conventional television (TV) receiver supplied with a conventional TV signal having signal components for control of three color guns reproducing the three primary colors, such as red, green and blue, for example, and having video amplifiers for amplifying at least said red and blue signals,

(b) at least two separate analog switch means to control the passage of said red and blue signals to said corresponding red and blue guns respectively; and

(c) means to sequentially enable one and then the other of said two analog switch means so that the red signal is muted during one sub-raster, and the blue signal is muted during the other sub-raster.

13. The apparatus as in claim 12 including means to inject a selected small phase shift in one or the other of said switched red and blue signals.

0034686

14. Method and apparatus means for processing televsion signals for viewing moving holograms in a three dimensional aspect, as shown in Fig.8

a. means for muting or blocking the output of at least one of the tubes of a conventional television camera, or relating video signals in a video recorder, transmitter, or switcher, using high speed pulsing which alternatly switches pulsed color zones(vertical bars aprx. one MHz.) from field to field at sixty hertz camera sync.

b. means and apparatus for muting or switching one or more of the video outputs of a color television camera processing color sensitive light zones (vertical bars ) which polorize the human eyes so that · : as a special layered mirror system of said Fig. 8 or Fig. 14 is utilized in front of a conventional camera lens, a moving three dimensional hologram visual scene is processed for viewing on television without the aid of special viewing glasses worn by the viewer.

c. means and apparatus for accomplishing full color holography by said means of at least one layered dichoric mirror extended forward aprx. ninety degrees from the placement of said conventional camera lens.

d. means and apparatus for collecting nominal light patterns and coherant light and color encoding means comprised of two said dichroic mirrors extended forward from the placement of a conventional camera lens and spaced apart a selected distance from each other in  parallel fashion.

- 7 -

0034686

(e)  means to tint the said mirrors for color encoding a selected color utilizing alternating high and low density reflective layered surfaces.

(f)  means for processing nominal & coherant light so that during processing at least one primary or secondary color corresponds to one of the light sensitive zones created by the said high speed muting circuits and it's related said light path mirror angle.

(g)  means and apparatus for synchronously firing  or pulsing said laser or lasers with a variable high speed clock which also drives the said high speed muting circuits.

(h)  means and apparatus for imaging coherant holographic or nominal light to the said camera lens by the use of said dichroic mirror or mirrors extended forward from the placement of said conventional camera lens ninety degrees.

(i)  means and apparatus for imaging coherant light or nominal light to the said camera lens by use of a said solid glass or plastic cube three dimensional holographic lens fitted with a back plate for threaded ring mounting of the said cube lens to the said conventional camera lens. As in Fig. 14 said cube lens being optionally fitted with one or more successively layered high and low density half silvered mirrors and (optionally tinted for said color coding).

(j)  means and apparatus for placement of said laser, or lasers either fixed to the said conventional camera on either side or nominally placed onstands, or ceiling mounted.

(k)  means of sequentually firing said high speed clock alternately from field to field synchronously as said muting and pulsing circuits are clocked.

1. means to process vertical light sensitive zones in a color television monitor, video tape recorder transmitter, or switcher for processing said three dimensional moving holograms for viewing on television by means of circritry described in said fig. 8, fig.11, fig.12, fig.13, fig. 15 as related to said vertical bars shown in fig. 9 and fig.10

15. means to process television signals so that three dimensional moving holograms for televison presentation may be processed for distribution on conventional recording disk, cassette tape, or transmitted on a band-width as small as FM modulation, via use of digital circuits shown in Fig.12 and Fig. 13.

a. means to use standard demodulation circuits to demodulate audio, horizontal sync, vertical sync, red, blue, and green video signals(voltages)

b. means to modify said signals for three dimensional moving holograms:    1. 3.58 MHz varible clock

        2. ÷ by N counter

        3. RST means to horizontal sync

c.  means to mute or switch said analog switches for high and low speed muting of said red, blue, and green video signals in said digital circuits, fig. 12 and Fig. 13.

d. means to digitally phase shift video voltages controlled by said voltage controlled oscillators regulated from said red, green and blue camera tubes which in turn drive the said analog time delay circuits controlling said digital *phased pulses* which ultimately passes said red, blue ,green signals referenced to said clock frequencies

e. means to pass audio signal in a conventional analog state or means to simulate audio stereo from said one channel via said delay line 26 d.

0034686

16.     Apparatus for playback and viewing in three dimensions and moving holograms from signals processed by narrow band television recorder as recorded by means of method of claim 16.

(a)     means to play back the recorded signals can be any audio frequency reproducer such as a   cassette playback unit, reel to reel player, or vinyl record disk capable of producing the normal hi fi audio range of frequencies up to and above at least 16,000 cps.

(c)     means to filter out left channel signals:   a 20 to 13,000 cps filter to allow the left audio track to seperate out to the left audio amplifier of the playback unit. also means to filter or seperate out the red phased control signal of 14,000 cps. Also means to filter out or seperate the blue phased control signal of 16,000 cps.

(d)     means to filter out right channel signals:   a 20 to 13,000 filter to allow the right audio track to seperate out to the right audio amplifier of the playback unit. Also means to filter or seperate out the green phased control signalof 14,000 cps.  Also means to filter out or seperate the 15,734 synchronizing pulses and further process said signal to detect the missing pulses which when detected by means of a missing pulse detector generates the verticaldrive sync pulses. Also means to route said sync pulses to standard and known re-modulation circuits and onward to the television reciever.

(e)    means to phase said red control pulses against reference clock of 14,000 cps which inthis case could be a crystal for stability divided down to the reference frequency.

(f)    means to phase said green control pulses against reference clock of 14,000 cps which in this case could be a crystal for stability divided down to the reference frequency .

(g)    means to phase said blue control pulses against reference clock of 16,000 cps which inthis case could be a cystal for stability divided down to the reference frequency.

(h)    means of phasing the above stated control pulses as claimed in 16 e, f, and g, through seperate two input And gates with each and gate having one of it's inputs connected to the respectve control pulse and the othe leg or input connected to the respective reference frequency originally recorded with;producing a resultant video control voltage.

(g)    means of transmitting the resultant video voltages to standard and known re-modulation circritry for inputing a Rf envelope.  Also means to include in that said RF re-modulated signal audio and sync signals; the RF signal being inputed to a standard TV reciever for viewing of the said television picture with sound.

(h) means also to pull off the suedo stereo auxillary outputs to an additional hi fi stereo amplifier.

0034686

(g)     means to generate control and referance frequencies by a highlystable reference clock of the same frequency producing a square wave pulse pattern.

(h)     the above stated red blue and green control and reference frequencies can be the same for two primary colors and different for the 3rd primary color..

(i)     these control and reference frequencies of claim 16h can be originally selected downward or upward for selection of better or smoother operation of the system, ie. lower reference & control frequencies would give a course picture; alternately a higher selection of control frequency would give a finer grid for a better or more accurate video picture.

(j)     by utilizing only the right channel of claim 16d a monochrome 1 channel TV picture could be generated for the purpose of a mono cassette recorder or single line telephone narrow band transmission of video and audio reproduction, with or with-out the three dimensional hologram encoding.

17.     Apparatus for programming a 1 to 6 field or sub-raster sequencial switching or muting bus system of low and high speed pulses for control of analog muting switches of the red green and blue video signals of a television camera system and it's optional laser light system for generating three dimensional holografic televison signals.

(a)      means to generate high speed syncronized variable + or - 3.58MHZ control pulses divided down with a divide by Ncounter with it's reset line tied to the horizontal sync from the TV camera system providing     synchronization    allignment of the vertical light sensitive bars which the system generates.

(b) means to enter these pulsese of claim 17a into the control of a EPROM type sequencial generator bus system through three "And" gates.

(c)       means to sequentually switch and mute the above claimed high speed pulses of claim 17a in field to field changes by programable 1 - N counter driving the 1-6 multiplexer by inputting the vertical drive sync pulses from the camera system into the 1-N counter.

(d)      means to strap the 1-N counter to count to any appropriate number between 1 and 6 programming the field to field changes from one field continuously repeating to a limit of six field changes before re-cycling.

(e)      means to write any appropriate program into the sequence by setting the appropriae diode switches to "on" position.

(f)      means to route the generated pulses to the appropriate red, green, and blue analog switches to sequentually mute any of the primary colors according to the selected program.

Fig.1

0034686

Fig. 2

Fig. 3

Fig. 4

3

Fig.5

Fig.6

Fig.7

FIG. 8

0034686

5

FIELD 1,
1ST SCAN OR
SUB-RASTER

| YELLOW (RG) |
|---|
| WHITE (RGB) |
| YELLOW |
| WHITE |
| YELLOW |
| WHITE |
| YELLOW |
| WHITE |
| YELLOW |
| WHITE |

VERTICAL COLOR SENSITIVE LIGHT ZONES

etc.

T.V. SCREEN

FIG 9

FIELD 2,
2ND SCAN OR
SUB-RASTER

| CYAN (BG) |
|---|
| WHITE (RGB) |
| CYAN |
| WHITE |
| CYAN |
| WHITE |
| CYAN |
| WHITE |
| CYAN |
| WHITE |
| CYAN |

VERTICAL COLOR SENSITIVE LIGHT ZONES

etc.

T.V. SCREEN

FIG. 10

FIG. 11

FIG.12

FIG. 23

0034686

9

Fig. 14

FIG. 15

0034686

European Patent Office

**EUROPEAN SEARCH REPORT**

Application number

EP 80 40 0243

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 285 037 (VIDEON) <br><br> * Page 4, lines 16-22; page 5, line 37 to page 6, line 11 * <br><br> --- <br><br> FR - A - 2 400 300 (MOSKOVSKY GOSUDARST VENNY UNIVERSITET IMENI) <br><br> * Page 21, line 1 to page 22, line 9 * <br><br> --- | 1,3,4 8,10, 12 <br><br><br><br> 1 | **H 04 N 9/60** |
| A | GB - A - 899 969 (MULLARD) <br><br> ----- | 1 | **TECHNICAL FIELDS SEARCHED (Int.Cl. 3)** <br><br> **H 04 N 9/60** |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 20-10-1980 | SIX |

EPO Form 1503.1   06.78